# EUROPÄISCHE PATENTSCHRIFT

(11) **EP 2 037 005 B1**
(45) Veröffentlichungstag und Bekanntmachung des Hinweises auf die Patenterteilung: **15.05.2019**
(21) Anmeldenummer: 08015441.2
(22) Anmeldetag: 02.09.2008
(51) Int. Cl.: C25B 11/14, C25B 1/26

(54) **Verfahren zur Herstellung von Graphitelektoden für elektrolytische Processe**
Method for manufacturing graphite electrodes for electrolytic processes
Procédé de fabrication d'électrodes de graphite pour des processus électrolytiques

(30) Priorität: 15.09.2007 DE 102007044171
(43) Veröffentlichungstag der Anmeldung: 18.03.2009
(73) Patentinhaber: Covestro Deutschland AG, 51373 Leverkusen (DE)
(72) Erfinder: Weber, Rainer, Dr., 51519 Odenthal (DE); Kintrup, Jürgen, Dr., 48282 Emsdetten (DE); Weis, Matthias, 51379 Leverkusen (DE); Muddemann, Odo, 51061 Köln (DE); Moormann, Gerhard, 25541 Brunsbüttel (DE); Rauscher, Frank, Dr., 50968 Köln (DE)
(74) Vertreter: Levpat

(56) Entgegenhaltungen:
- DE-A1- 2 138 625
- US-A- 3 770 613
- US-A- 3 974 047
- US-A- 5 133 842
- US-A- 5 538 618

## Beschreibung

Die Erfindung betrifft ein Verfahren zur Herstellung von Graphitelektroden mit einer Beschichtung aus feinteiligem Iridium für elektrolytische Prozesse, insbesondere für die Salzsäure-Elektrolyse.

Ein Verfahren zur Salzsäure-Elektrolyse ist in Ullmanns Encyclopedia of Industrial Chemistry, Chlorine 10.1 Electrolysis of Hydrochloric Acid, 2006, Wiley-VCH Verlag beschrieben. Die bei der Salzsäure-Elektrolyse typischerweise verwendeten Elektrolyseure bestehen aus bipolar geschalteten Graphit-Elektrodenplatten, die nach dem Filterpressenprinzip aneinandergereiht sind. Anoden- und Kathodenraum sind in der Regel durch ein Diaphragma oder eine Kationenaustauscher-Membran getrennt. Auf der Anodenseite wird üblicherweise Chlor und auf der Kathodenseite Wasserstoff erzeugt. In die Kathodenräume der Elektrolyseure werden kontinuierlich oder diskontinuierlich Edelmetallsalze, wie beispielsweise Salze von Platin, Palladium und Rhodium zugegeben um die Wasserstoff-Abscheidungspannung und damit die Zellspannung zu senken. Dabei scheidet sich auf den Graphitelektroden metallisches Edelmetall ab. Ein wesentlicher Nachteil dieses Vorgehens ist, dass die Edelmetall-Abscheidung nur kurzfristig zu dem gewünschten Effekt der Spannungserniedrigung führt und daher ständig erneuert werden muss, was unter anderem zu einem hohen Edelmetallverbrauch führt. Ein weiterer Nachteil besteht gemäß EP 683 247 A1 darin, dass sich Edelmetalle im gesamten, den Zellen nachgeschalteten Apparatesystem ablagern können.

DE 2138625 A1 beschreibt eine Elektrode für die Chlor-Alkali-Elektrolyse, welche aus mit Ruthenium beschichtetem Graphit besteht. Die Beschichtung wird durch Elektroplattieren oder Reduktionsplattierem mit anschließender Wärmebehandlung in Anwesenheit von Stickstoff oder Argon aufgebracht.

EP 683 247 A1 beschreibt ein Verfahren zur Herstellung von Graphitelektroden, bei denen in den Poren der Graphit-Oberfläche Edelmetall-Beläge, beispielsweise Iridium- und/oder Rhodiumbeläge erzeugt werden. Die Herstellung der Graphit-Elektroden gemäß EP 683 247 A1 erfolgt durch Einbringen von Lösungen von Iridiumsalzen oder Rhodiumsalzen oder von Gemischen aus Iridiumsalzen oder Rhodiumsalzen mit Salzen der übrigen Metalle aus der Platingruppe in ein- oder mehrwertigen Alkoholen mit 2 bis 4 Kohlenstoffatomen oder in Alkohol-Gemischen in den Graphit. Anschließend wird der getränkte Graphitkörper mit offenen Gasflammen an der mit der Lösung getränkten Oberfläche in einer Tiefe bis zu etwa 1 mm auf eine Temperatur zwischen 200 bis 450 °C innerhalb von 2 bis 10 Minuten erhitzt, wobei die Gasflammen erst dann von oben senkrecht nach unten auf den getränkten Graphitkörper einwirken, wenn der gesamte getränkte Graphitkörper sich unterhalb der Gasflammen befindet.

Bei diesem Verfahren erhält man eine Edelmetallbeschichtung, die unter den Betriebsbedingungen der Salzsäure-Elektrolyse über eine gewisse Zeit beständig ist und nicht erneuert werden muss.

Nachteile des Verfahrens nach EP 683 247 A1 sind die immer noch nicht optimale Absenkung der Überspannung an den nach diesem Verfahren modifizierten Elektroden in der Elektrolyse, der Einsatz von alkoholischen Lösungsmitteln, die an Luft explosionsfähige Gemische bilden können und daher besondere Sicherheitsmaßnahmen bei diesem mit offenen Flammen arbeitenden Verfahren erfordern, sowie eine bedingt durch große Temperaturunterschiede zwischen der eingesetzten Gasflamme, der getränkten Oberfläche des Graphits und des Graphitvolumens ungenaue Temperaturkontrolle bei der Erhitzung.

Aufgabe der Erfindung ist es, ein verbessertes Verfahren zur Herstellung von Graphitelektroden für elektrolytische Prozesse, bei der die Graphitelektrode als Kathode zur Erzeugung von Wasserstoff geschaltet wird, zur Verfügung zu stellen, das die oben genannten Nachteile nicht aufweist.

Gegenstand des erfindungsgemäßen Verfahrens ist ein Verfahren zur Herstellung von Graphitelektroden mit einer Beschichtung vorwiegend aus Edelmetall für die Salzsäure-Elektrolyse, bei der die Graphitelektrode als Kathode zur Erzeugung von Wasserstoff geschaltet wird, welches dadurch gekennzeichnet ist, dass die Oberfläche der Graphitelektrode mit einer wässrigen Lösung einer Edelmetallverbindung beschichtet, das Lösemittel entfernt wird und die Graphitelektrode anschließend in Anwesenheit von reduzierenden und/oder weitgehend sauerstofffreien Gasen bei 250 bis 350°C getempert wird.

Die fertige Beschichtung auf der Elektrode weist insbesondere mindestens 95 Gew.-%, bevorzugt mindestens 99 Gew.-% Edelmetall auf.

Als Edelmetallverbindung wird insbesondere wenigstens eine Verbindung aus der Reihe: Iridium-, Ruthenium-, Rhodium-, Platin- und Palladiumverbindungen, insbesondere Salze von anorganischen oder organischen Säuren oder Komplexverbindungen allein oder in beliebiger Mischung eingesetzt. Vorzugsweise werden Iridium-, Ruthenium-, Rhodium-, Platin- oder Palladiumhalogenide, Acetate, Oxalate, Nitrate oder Pentandionate, insbesondere bevorzugt Halogenide der genannten Edelmetalle, besonders bevorzugt Chloride der Edelmetalle verwendet. Besonders bevorzugt wird ein Iridiumchlorid eingesetzt. Das Iridiumchlorid kann z.B. IrCl₃ oder IrCl₄ oder ein Gemisch von beiden sein. Da Wasser als Lösungsmittel eingesetzt wird können die genannten Verbindungen auch Hydratwasser enthalten. Es kann aber auch beispielsweise eine saure Iridiumhalogenid-Lösung, zum Beispiel Hexachloro-Iridium(IV)-Säure eingesetzt werden.

Die wässrige Lösung der Edelmetallverbindungen kann zusätzlich oberflächenaktive Substanzen, insbesondere Tenside, weitere Salze oder insbesondere Mineralsäuren enthalten und ferner mit Wasser mischbare organische Lösemittel, insbesondere Alkohole oder Ketone.

Die Menge an Edelmetallverbindung wird bevorzugt so bemessen, dass die erzeugte Beschichtung 5 bis 40 g/m², vorzugsweise 7,5 bis 20 g/m² an Edelmetall bezogen auf die Graphitelektrodengrundfläche, d. h. die durch die äußeren Abmessungen (Kantenlängen) gegebene geometrische Oberfläche, enthält.

Die Behandlung erfolgt insbesondere in einem Ofen oder Wärmeschrank, wobei die Gase die beschichtete Fläche der Elektrode überströmen. Dazu besitzt der Ofen oder Wärmeschrank beispielsweise eine Öffnung für den Gaszutritt und einen Gasauslass und ist gegen Luftzutritt von außen abgedichtet. Z. B. bei nicht vollständiger Gasdichtheit des Ofens kann der Ofeninnenraum gegenüber der umgebenden Atmosphärenluft mit geringfügig höherem Druck betrieben werden, um ein Eindringen von Luft zu vermeiden. Man arbeitet insbesondere bei einer Restluftkonzentration von höchstens 25 Vol.-%, bevorzugt höchstens von 5 Vol.-% und besonders bevorzugt höchstens von 2 Vol.-% Luft.. Der Anteil an Sauerstoff im Tempergas beträgt insbesondere höchstens 5 Vol.-%, bevorzugt höchstens 3 Vol.-%, besonders bevorzugt höchstens 1 Vol.-%.

Vorzugsweise besteht die eingesetzte Gasatmosphäre aus einem inerten Gas, insbesondere Stickstoff oder einem Edelgas, bevorzugt Helium, Argon, Neon, Krypton, Radon oder Xenon oder Kohlenstoffdioxid oder einem Gasgemisch eines genannten inerten Gases mit Wasserstoff oder reinem Wasserstoff. Der Wasserstoffanteil kann also im Bereich von 0 Vol.-% (reines Inertgas) bis 100 Vol.-% (reiner Wasserstoff) liegen, bevorzugt wird aber eine Wasserstoff-Konzentration im Bereich von 1 bis 5,5 Vol-% eingesetzt. Als Inertgas wird besonders bevorzugt Stickstoff eingesetzt. Grundsätzlich geeignete Wasserstoff-Stickstoff-Gemische sind im Handel bereits fertig gemischt unter der Bezeichnung Formiergas erhältlich.

Die Behandlungsdauer in der reduzierenden und/oder weitgehend sauerstofffreien Gasatmosphäre beträgt bevorzugt 1 bis 5 Stunden, besonders bevorzugt 2 bis 3 Stunden.

In einer bevorzugten Ausführung der Erfindung wird nach Beschickung des Ofens mit einer oder mehrerer Graphitelektroden der Ofen verschlossen und zunächst bei Raumtemperatur mit der oben beschriebenen Gasatmosphäre bei Raumtemperatur durchspült, bis eine Restluftkonzentration von 25 Vol.-%, bevorzugt von 5 Vol.-% und besonders bevorzugt von 1 Vol.-% unterschritten wird. Anschließend wird der Ofen unter weiterer Gasspülung auf die Zieltemperatur aufgeheizt und für die gewählte Behandlungsdauer unter weiterer Gasspülung bei dieser Temperatur belassen. Anschließend lässt man den Ofenraum unter weiterer Gasspülung abkühlen und entnimmt den Ofeninhalt, nachdem eine Temperatur von 100 °C, bevorzugt von 50 °C unterschritten wurde.

Die nach dem erfindungsgemäßen Verfahren beschichteten Graphitelektroden sind hervorragend für die Herstellung von Chlor und Wasserstoff durch Elektrolyse von Salzsäure geeignet.

Die HCl-Konzentration bei der Elektrolyse von Salzsäure mit den erfindungsgemäß beschichteten Graphitelektroden kann 5 bis 36 Gew.-% betragen. In der Regel wird eine Salzsäure mit einer HCl-Konzentration zwischen 10 bis 30 Gew.-% verwendet. Bevorzugt ist eine HCl-Konzentration im Bereich von 15 bis 25 Gew.-%.

Die Elektrolyse von Salzsäure mit den erfindungsgemäß beschichteten Graphitelektroden wird gewöhnlich bei einer Temperatur von 30 bis 100 °C, bevorzugt 50 bis 100 °C, besonders bevorzugt 70 bis 90 °C betrieben.

Für die Herstellung der erfindungsgemäß beschichteten Graphitelektroden wird bevorzugt Elektrodengraphit (graphite for technical electrolytic processes) verwendet, z.B. ein Graphittyp wie der von der Firma Graphite COVA GmbH, Röthenbach der Qualität AX oder von der Firma SGL Carbon GmbH, Meitingen vertriebene Graphit der Qualität HL, ML oder AL. Derartige besonders geeignete Graphitsorten weisen üblicherweise eine arteigene Porosität (akkumuliertes Porenvolumen) von 12 bis 23 % auf, der spezifische Widerstand liegt bei 5,0 bis 12,5 µΩm, die scheinbare Dichte (bulk density) beträgt 1,60 bis 1,80 g/cm³, und der Aschegehalt liegt unterhalb von 0,1%.

Zur Verbesserung der Gasableitung der in der Elektrolyse entstehenden Gase (Anode: Chlor, Kathode: Wasserstoff) kann eine Oberflächenstrukturierung der Graphitelektroden durchgeführt werden, beispielsweise durch Einbringen von 1 mm bis 3 mm breiten Schlitzen in die Oberfläche der Graphitelektroden, die in einem Abstand von 3 bis 7 mm mit einer Tiefe von 10 bis 30 mm angeordnet sind. Bei Graphitelektroden mit strukturierter Oberfläche erweist sich das neue Beschichtungsverfahren besonders vorteilhaft wegen der höheren Gleichmäßigkeit der Beschichtung.

Die zur Trennung von Anoden und Kathodenraum in der Diaphragmaelektrolyse bevorzugt eingesetzten Diaphragmen bestehen bevorzugt aus PVC-Gewebe, Mischgewebe aus PVC und PVDF oder aus PVDF-Gewebe.

Alternativ dazu können auch Membranen aus Polyfluorsulfonsäuren (z.B. Membranen der Firma DuPont, Typ Nafion® 430) eingesetzt werden.

Die bei der Elektrolyse mit den erfindungsgemäß beschichteten Graphitelektroden bevorzugt einzusetzende Salzsäure fällt z.B. bei der Synthese von organischen Verbindungen, wie beispielsweise Polyisocyanaten an. Es hat sich als vorteilhaft erwiesen die Salzsäure vor Eintritt in die Elektrolysezellen von Verunreinigungen, insbesondere von organischen Verunreinigungen zu befreien. Dazu wird die Salzsäure mittels Aktivkohle behandelt. Alternativ dazu ist auch eine Behandlung mit Ozon oder Extraktionsmitteln möglich. Anorganische Verunreinigungen können mit Ionenaustauschverfahren entfernt werden.

Nachfolgend wird die Erfindung anhand folgender Beispiele näher erläutert.

### Beispiele

### Beispiel 1 (Vergleichsbeispiel)

In einer Elektrolysezelle mit einem Diaphragma aus PVC mit zwei unbeschichteten Graphitelektroden (COVA Typ AX-20) jeweils mit der Grundfläche 100 mm x 100 mm, einer Dicke von 60 mm und vierzehn 5 mm breiten Stegen, die durch 13 Schlitze einer Breite von ca. 2 mm und einer Tiefe von 19 mm strukturiert waren, wurde Salzsäure elektrolysiert. Der Umlauf der Salzsäure in einem internen Umpumpkreislauf betrug 6 l/h in beiden Elektrodenräumen. Der Abstand zwischen den Oberflächen der jeweils senkrecht stehenden Kathode und der Anode betrug 5 mm, wobei die Schlitze vertikal angeordnet waren. Das Zellengehäuse bestand aus säure- und chlorstabilem Kunststoff. Die Kathode und die Anode waren mit Stromzuführungsbolzen in das Zellengehäuse eingedichtet. Beide Zellenhälften waren durch ein Diaphragma aus PVC getrennt. Der Elektrolyt konnte in beiden Zellenhälften unter Variation des Durchsatzes im Bereich zwischen 2 l/h und 10 l/h umgepumpt werden. Diesen Kreisläufen wurde frische 30 %-ige Salzsäure mittels Dosierpumpen so zugeführt, dass sich später in den Elektrolytkammern während der Elektrolyse eine Konzentration von etwa 20 Gew.-% Salzsäure einstellte. Durch Gas/Flüssigkeitsabscheider verlassen die Produktgase und die verarmten Elektrolyte die Zelle. Mit einem Stromversorgungsgerät wurde ein Strom von 50 A und somit eine Stromdichte von 5 kA/m² eingestellt. Die sich einstellende Zellenspannung wurde mit zwei Graphitspitzen, in der Zuführung jeweils isoliert in den Vorderkanten der Elektroden abgegriffen.

Nach einer Einfahrperiode von 5 Tagen betrug die Zellspannung 1,97 Volt bei einer Temperatur von 75 °C.

Anschließend wurde das Diaphragma aus PVC ausgetauscht gegen eine Kationenaustauschermembran vom Typ Nafion® 430 der Fa. DuPont. Die Zellspannung betrug nach einer Einfahrperiode von 7 Tagen 1,99 Volt bei einer Temperatur von 81 °C.

### Beispiel 2 (Vergleichsbeispiel)

0,286 g Iridium(IV)chlorid-Hydrat (IrCl₄.H₂O, Ir-Gehalt 52,23 Gew.-%) wurden in 1,245 ml 1,2-Ethandiol gelöst. Mit dem Pinsel wurde diese Lösung vollständig auf die 14 Stegoberflächen (je 5 mm x 100 mm) einer Graphitelektrode mit der gleichen Struktur und Größe wie in Beispiel 1 gleichmäßig aufgetragen. Die aufgetragene Iridium-Menge betrug 15,0 g/m² bezogen auf die geometrische Graphitelektrodengrundfläche (100 mm x 100 mm). Nach ca. 15 Minuten wurde die mit der Lösung behandelte Seite (spätere Kathodenseite in der Elektrolyse) mit einer Flamme eines Butan/Propan-Gasbrenners 5 Minuten lang erhitzt, wobei eine Temperatur von 450 °C nach 5 Minuten erreicht war und wobei die Platte bereits vor Zünden der Flamme unterhalb des Brenners angeordnet worden war. Nach dem Erkalten auf kleiner 90 °C wurden die Stegoberflächen der Graphitelektrode mit 1,245 ml 1,2-Ethandiol (ohne Metallsalzzusatz) gleichmäßig bestrichen und die Erhitzung direkt anschließend (ohne Wartezeit) wiederholt. Die Graphitplatte wurde als Kathode in die in Beispiel 1 beschriebene Elektrolysezelle eingebaut. Bei Elektrolytdurchsätzen von 6 l/h stellte sich eine über 8 Tage gleichbleibende Zellenspannung von 1,77 Volt bei einer Stromdichte von 5 kA/m² und einer Temperatur von 75 °C bei Verwendung eines PVC-Diaphragmas ein.

### Beispiel 3 (erfindungsgemäß)

0,289 g Iridium(IV)chlorid-Hydrat (IrCl₄.H₂O, Ir-Gehalt 52,23 Gew.-%) wurden in 1,512 g deionisiertem Wasser gelöst. Die Lösung wurde vollständig mittels eines Pinsels auf die 14 Stegoberflächen (je 5 mm x 100 mm) einer Graphitelektrode mit der gleichen Struktur und Größe wie in Beispiel 1 aufgetragen, so dass sich eine Iridium-Beladung von 15,0 g/m² bezogen auf die Graphitelektrodengrundfläche (100 mm x 100 mm) ergab. Anschließend wurde der so beschichtete Elektrodenblock sogleich in einem senkrecht stehenden Rohrofen mit einem Innendurchmesser von 15 cm und einem Innenvolumen von ca. 5 1 behandelt, wobei der Elektrodenblock zunächst in einem Gasgemisch bestehend aus 5 Vol.-% Wasserstoff und 95 Vol.-% Stickstoff bei einem Gasvolumenstrom von 50 l/h für eine Dauer von 30 Minuten bei Raumtemperatur umspült wurde. Der Ofen wurde anschließend mit einer Aufheizrate von ca. 10 °C/Minute auf 250 °C aufgeheizt und der Elektrodenblock unter fortlaufendem Gasstrom für eine Dauer von 3 h getempert. Anschließend wurde die Ofenheizung abgestellt und der Elektrodenblock unter fortlaufendem Gasstrom abgekühlt. Innerhalb von ca. 3 Stunden war die Ofentemperatur auf unter 100 °C abgekühlt und der Gasstrom wurde abgestellt, wobei der verschlossene Ofen über Nacht weiter auf eine Temperatur von unterhalb 50 °C abkühlte und erst dann zur Entnahme der Elektrode geöffnet wurde.

Die so gefertigte Graphitelektrode wurde als Kathode in die in Beispiel 1 beschriebene Elektrolysezelle eingebaut. Bei einem Elektrolytdurchsatz von 6 l/h stellte sich am fünften Betriebstag eine Zellenspannung von 1,59 Volt bei einer Stromdichte von 5 kA/m² und einer Temperatur von 75 °C bei Verwendung eines PVC-Diaphragmas ein. Der Versuch wurde mit Abschaltungen und Variationen in der Stromdichte und Temperatur bis zu einer Versuchsdauer von 150 Tagen fortgesetzt, ohne dass ein Qualitätsverlust feststellbar war.

### Beispiel 4 (nicht erfindungsgemäß)

0,289 g Iridium(IV)chlorid-Hydrat (IrCl₄.H₂O, Ir-Gehalt 52,23 Gew.-%) wurden in 1,525 g deionisiertem Wasser gelöst und wie in Beispiel 3 auf die Stegoberflächen einer Graphitelektrode aufgetragen. Die anschließende Behandlung im Ofen erfolgte ebenfalls wie in Beispiel 3, mit dem einzigen Unterschied, dass der Ofen auf eine Temperatur von 450 °C aufgeheizt wurde und die Behandlungsdauer bei dieser Temperatur 2 h betrug.

Die so gefertigte Graphitelektrode wurde als Kathode in die in Beispiel 1 beschriebene Elektrolysezelle eingebaut. Bei einem Elektrolytdurchsatz von 6 l/h stellte sich am achten Betriebstag eine Zellenspannung von 1,73 Volt bei einer Stromdichte von 5 kA/m2 und einer Temperatur von 74 °C bei Verwendung eines PVC-Diaphragmas ein. Der Versuch wurde mit Abschaltungen und Variationen in der Temperatur bis zu einer Versuchsdauer von 45 Tagen fortgesetzt, ohne dass ein Qualitätsverlust feststellbar war.

### Beispiel 5 (erfindungsgemäß)

0,190g Ruthenium(III)chlorid-Hydrat (RuCl₃*H₂O, Ru-Gehalt 40,07 Gew.-%) und 0,143 g Iridium(IV)chlorid-Hydrat (IrCl₄.H₂O, Ir-Gehalt 52,23 Gew.-%) wurden in 1,504 g deionisiertem Wasser gelöst. Die Lösung wurde vollständig mittels eines Pinsels auf die 14 Stegoberflächen (je 5 mm x 100 mm) einer Graphitelektrode mit der gleichen Struktur und Größe wie in Beispiel 1 aufgetragen, so dass sich eine Ruthenium-Beladung von 7,6 g/m² und eine Iridium-Beladung von 7,5 g/m² bezogen auf die Graphitelektrodengrundfläche (100 mm x 100 mm) ergab.

Die Ofenbehandlung wurde analog zu Beispiel 3 durchgeführt.

Die so gefertigte Graphitelektrode wurde als Kathode in die in Beispiel 1 beschriebene Elektrolysezelle eingebaut. Bei einem Elektrolytdurchsatz von 6 l/h stellte sich am fünften Betriebstag eine Zellenspannung von 1,66 Volt bei einer Stromdichte von 5 kA/m² und einer Temperatur von 67 °C bei Verwendung einer Nafion® 430 Kationenaustauschermembran ein.

## Patentansprüche

1. Verfahren zur Herstellung von Graphitelektroden mit einer Beschichtung vorwiegend aus Edelmetall für die Salzsäure-Elektrolyse, bei der die Graphitelektrode als Kathode zur Erzeugung von Wasserstoff geschaltet wird, welches **dadurch gekennzeichnet ist, dass** die Oberfläche der Graphitelektrode mit einer wässrigen Lösung einer Edelmetallverbindung beschichtet, das Lösemittel entfernt wird und die Graphitelektrode anschließend in Anwesenheit von reduzierenden und/oder weitgehend sauerstofffreien Gasen bei 250 bis 350°C getempert wird.

2. Verfahren gemäß Anspruch 1, **dadurch gekennzeichnet, dass** als Edelmetallverbindung wenigstens eine Verbindung aus der Reihe: Iridium-, Ruthenium-, Rhodium-, Platin- und Palladiumverbindungen, insbesondere ein Salz einer anorganischen oder organischen Säure oder eine Komplexverbindung allein oder in beliebiger Mischung eingesetzt verwendet wird.

3. Verfahren gemäß Anspruch 1 oder 2, **dadurch gekennzeichnet, dass** als Edelmetallverbindung ein Iridium-, Ruthenium-, Rhodium-, Platin- oder Palladiumhalogenid, -acetat, -oxalat, -nitrat oder pentandionat, bevorzugt ein Halogenid dieser Edelmetalle verwendet wird.

4. Verfahren gemäß Anspruch 3, **dadurch gekennzeichnet, dass** als Edelmetallverbindung ein Iridium-, Ruthenium-, Rhodium-, Platin- oder Palladiumchlorid, bevorzugt Iridiumchlorid, besonders bevorzugt IrCl₃ oder IrCl₄ oder ein Gemisch von IrCl₃ und IrCl₄ eingesetzt wird.

5. Verfahren gemäß einem der Ansprüche 1 bis 4, **dadurch gekennzeichnet, dass** die erzeugte Edelmetallbeschichtung 5 bis 40 g/m², vorzugsweise 7,5 bis 20 g/m² an Edelmetall bezogen auf die Graphitelektrodengrundfläche enthält.

6. Verfahren gemäß einem der Ansprüche 1 bis 5, **dadurch gekennzeichnet, dass** die Gase aus einem Gasgemisch aus Stickstoff oder einem Edelgas mit Wasserstoff bestehen.

7. Verfahren nach Anspruch 6, **dadurch gekennzeichnet, dass** der Wasserstoffanteil im Gasgemisch im Bereich von 1 bis 5,5 Vol-% liegt.

8. Verfahren gemäß Anspruch 1 bis 7, **dadurch gekennzeichnet, dass** die Behandlungsdauer der Elektrodentemperung in der reduzierenden und/oder weitgehend sauerstofffreien Gasatmosphäre 1 bis 5 Stunden, vorzugsweise 2 bis 3 Stunden beträgt.

9. Verfahren nach einem der Ansprüche 1 bis 8, **dadurch gekennzeichnet, dass** der Anteil an Sauerstoff im Tempergas höchstens 5 Vol.-%, bevorzugt höchstens 3 Vol.-%, besonders bevorzugt höchstens 1 Vol.-%, beträgt.

## Claims

1. Process for producing graphite electrodes having a coating predominantly composed of precious metal for hydrochloric acid electrolysis, in which the graphite electrode is connected as cathode for production of hydrogen, which is **characterized in that** the surface of the graphite electrode is coated with an aqueous solution of a precious metal compound, the solvent is removed and the graphite electrode is then tempered in the presence of reducing and/or largely oxygen-free gases at 250 to 350°C.

2. Process according to Claim 1, **characterized in that** the precious metal compound used is at least one compound from the group of: iridium compounds, ruthenium compounds, rhodium compounds, platinum compounds and palladium compounds, especially a salt of an inorganic or organic acid or a complex, alone or in any mixture.

3. Process according to Claim 1 or 2, **characterized in that** the precious metal used is an iridium halide, acetate, oxalate, nitrate or pentanedionate, a ruthenium halide, acetate, oxalate, nitrate or pentanedionate, a rhodium halide, acetate, oxalate, nitrate or pentanedionate, a platinum halide, acetate, oxalate, nitrate or pentanedionate or a palladium halide, acetate, oxalate, nitrate or pentanedionate, preferably a halide of these precious metals.

4. Process according to Claim 3, **characterized in that** the precious metal compound used is an iridium chloride, ruthenium chloride, rhodium chloride, platinum, palladium chloride, preferably iridium chloride, more preferably IrCl₃ or IrCl₄ or a mixture of IrCl₃ and IrCl₄.

5. Process according to any of Claims 1 to 4, **characterized in that** the precious metal coating produced contains 5 to 40 g/m², preferably 7.5 to 20 g/m², of precious metal, based on the graphite electrode base area.

6. Process according to any of Claims 1 to 5, **characterized in that** the gases consist of a gas mixture of nitrogen or a noble gas with hydrogen.

7. Process according to Claim 6, **characterized in that** the hydrogen content in the gas mixture is in the range from 1% to 5.5% by volume.

8. Process according to Claims 1 to 7, **characterized in that** the duration of treatment in the electrode tempering in the reducing and/or largely oxygen-free gas atmosphere is 1 to 5 hours, preferably 2 to 3 hours.

9. Process according to any of Claims 1 to 8, **characterized in that** the proportion of oxygen in the tempering gas is not more than 5% by volume, preferably not more than 3% by volume, more preferably not more than 1% by volume.

## Revendications

1. Procédé de fabrication d'électrodes en graphite comprenant un revêtement majoritairement constitué par un métal noble pour l'électrolyse de l'acide chlorhydrique, lors de laquelle l'électrode en graphite est raccordée en tant que cathode pour la formation d'hydrogène, qui est **caractérisé en ce que** la surface de l'électrode en graphite est revêtue avec une solution aqueuse d'un composé de métal noble, le solvant est éliminé, puis l'électrode en graphite est recuite en présence de gaz réducteurs et/ou essentiellement exempts d'oxygène à une température de 250 à 350 °C.

2. Procédé selon la revendication 1, **caractérisé en ce qu'**au moins un composé de la série constituée par les composés d'iridium, de ruthénium, de rhodium, de platine et de palladium, notamment un sel d'un acide inorganique ou organique ou un composé complexe est utilisé seul ou dans un mélange quelconque en tant que composé de métal noble.

3. Procédé selon la revendication 1 ou 2, **caractérisé en ce qu'**un halogénure, acétate, oxalate, nitrate ou pentane-dionate d'iridium, de ruthénium, de rhodium, de platine ou de palladium, de préférence un halogénure de ces métaux nobles, est utilisé en tant que composé de métal noble.

4. Procédé selon la revendication 3, **caractérisé en ce qu'**un chlorure d'iridium, de ruthénium, de rhodium, de platine ou de palladium, de préférence le chlorure d'iridium, de manière particulièrement préférée IrCl₃ ou IrCl₄ ou un mélange d' IrCl₃ et d' IrCl₄, est utilisé en tant que composé de métal noble.

5. Procédé selon l'un quelconque des revendications 1 à 4, **caractérisé en ce que** le revêtement de métal noble formé contient 5 à 40 g/m², de préférence 7,5 à 20 g/m², de métal noble par rapport la surface de base de l'électrode en graphite.

6. Procédé selon l'un quelconque des revendications 1 à 5, **caractérisé en ce que** les gaz sont constitués par un mélange gazeux d'azote ou d'un gaz noble avec de l'hydrogène.

7. Procédé selon la revendication 6, **caractérisé en ce que** la proportion d'hydrogène dans le mélange gazeux se situe dans la plage allant de 1 à 5,5 % en volume.

8. Procédé selon les revendications 1 à 7, **caractérisé en ce que** la durée de traitement du recuit de l'électrode dans l'atmosphère gazeuse réductrice et/ou essentiellement exempte d'oxygène est de 1 à 5 heures, de préférence de 2 à 3 heures.

9. Procédé selon l'une quelconque des revendications 1 à 8, **caractérisé en ce que** la proportion d'oxygène dans le gaz de recuit est d'au plus 5 % en volume, de préférence d'au plus 3 % en volume, de manière particulièrement préférée d'au plus 1 % en volume.
